# EUROPEAN PATENT APPLICATION

(11) **EP 4 672 453 A2**
(43) Date of publication of application: **31.12.2025**
(21) Application number: 25174133.6
(22) Date of filing: 04.05.2025
(51) Int. Cl.: H01M 50/204, H01M 50/244, H01M 50/249, H01M 50/258, H01M 50/262

(54) **BATTERY CASE, BATTERY DEVICE, AND VEHICLE**

(30) Priority: 10.05.2024 JP 2024077506
(71) Applicant: Storm Group B.V., 5708 JZ Helmond (NL)
(72) Inventor: VAN DIGGELEN VERHOEK, Bram Thomas, Helmond (NL); YVES PAVY, Ludovic Michel, Helmond (NL); VAN RAVENSTEIN, Luuk, Helmond (NL); STIJN, Spanjaard, Helmond (NL)
(74) Representative: Sekiguchi, Kazuya

(57) **Abstract**

To enable easy change of the specification of a battery device.

A battery case 101 of a battery device 100 includes a plurality of case members 10 stacked in a first direction, and an accommodation space S.

The accommodation space S is capable of accommodating a battery module 102 between the case members 10 adjacent to each other in the first direction. The case member 10 on one side further has first coupling portions 123, 225. The first coupling portions 123, 225 are disposed on both end sides in a second direction intersecting the first direction of the plate portion 20 of the case member 10 on the one side. The case member 10 on the other side further has second coupling portions 223, 323. The second coupling portions 223, 323 are disposed on both end sides in the second direction of the case member 10 on the other side and are coupled to the first coupling portions 123, 225.

## Description

### TECHNICAL FIELD

The present invention relates to a battery case, a battery device, and a vehicle.

### BACKGROUND ART

Conventionally, a work vehicle that can be driven by electric power supplied from a battery device has been known. For example, Patent Document 1 discloses a battery system for an electric work vehicle. This battery system includes a plurality of battery mounting portions. A battery pack is detachably attached to each of the battery mounting portions.

Incidentally, specifications (size, output voltage, power capacity, and the like) of the battery device differ depending on the work vehicle and thus, are customized for each work vehicle.

### PRIOR ART DOCUMENT

### PATENT DOCUMENT

Patent Document 1: Japanese Unexamined Patent Publication No. 2017-158516

### SUMMARY OF INVENTION

### TECHNICAL PROBLEM

However, customization of the battery device in accordance with the work vehicle imposes a heavy burden on a designer and a manufacturer and takes time and cost for manufacturing, and mass-production is not easy. Therefore, a scale merit (economies of scale) tends to become low. In addition, since work vehicles are customized with different specifications, respectively, a method and easiness of maintenance and inspection are different. Therefore, it may be difficult to maintain maintainability and inspection workability.

In view of the above-described circumstances, the present invention has an object to enable easy change of the specifications of a battery device.

### SOLUTION TO PROBLEM

In order to achieve the above-described object, a battery case according to one aspect of the present invention includes a plurality of case members and an accommodation space. The plurality of case members are stacked in a first direction.

The accommodation space is configured to accommodate a battery module between the case members adjacent to each other in the first direction. Each of the case members adjacent to each other in the first direction has a plate portion spreading in a direction intersecting the first direction. The case member on one side in the first direction in the case members adjacent to each other in the first direction further includes a first coupling portion. The first coupling portion is disposed on both end sides in a second direction intersecting the first direction of the plate portion of the case member on one side in the first direction. The case member on the other side in the first direction of the case members adjacent to each other in the first direction further includes a second coupling portion. The second coupling portion is disposed on both end sides in the second direction of the case member on the other side in the first direction and is coupled to the first coupling portion.

In addition, in order to achieve the above-described object, a battery device according to an aspect of the present invention includes the above-described battery case and a battery module. The above-described battery module is accommodated in the above-described battery case.

In addition, in order to achieve the above-described object, a vehicle according to an aspect of the present invention includes the above-described battery device.

Further features and advantages of the present invention will become more apparent from the following embodiments.

### ADVANTAGEOUS EFFECTS OF INVENTION

According to the present invention, the specification of the battery device can be easily changed.

### BRIEF DESCRIPTION OF DRAWINGS

FIG. 1 is an exploded perspective view illustrating a configuration example of the battery device according to this Embodiment.
FIG. 2 is an external view of the battery device.
FIG. 3 is a sectional view of the battery device.
FIG. 4 is a schematic view of an example of a vehicle on which the battery device is mounted.
FIG. 5 is a sectional view of the battery device on which a heater is mounted.
FIG. 6 is a schematic sectional view illustrating an example of connection with a connecting portion of another battery case.

### DESCRIPTION OF EMBODIMENTS

Hereinafter, Embodiments of the present invention will be described with reference to the drawings.

### 1. Embodiment

Note that, in this specification, a battery device 100 is normally placed with a bottom plate portion 31, which will be described later, in contact with a placement surface. In addition, in the battery device 100, a top plate portion 11, which will be described later, is disposed vertically above the bottom plate portion 31. Therefore, in this specification, a direction from one to the other of the top plate portion 11 and the bottom plate portion 31, which will be described later (in other words, an opposing direction of the both) is referred to as an "up-down direction". In the up-down direction, a direction from the bottom plate portion 31 to the top plate portion 11 is referred to as "upward", and a direction from the top plate portion 11 to the bottom plate portion 31 is referred to as "downward". Note that the "up-down direction" is an example of a "first direction" in the present invention. In addition, the "upward" is an example of "one side in the first direction" of the present invention, and the "downward" is an example of "the other side in the first direction" of the present invention.

In addition, a direction from one to the other of a front plate 4 and a rear plate 5, which will be described later, is referred to as a "front-rear direction". In other words, the front-rear direction is a direction in which the both face each other and is a direction perpendicular to the up-down direction. In the front-rear direction, a direction from the rear plate 5 to the front plate 4 is referred to as "forward", and a direction from the front plate 4 to the rear plate 5 is referred to as "backward". Note that the "front-rear direction" is an example of a "third direction" in the present invention. In addition, the "forward" is an example of "one side in the third direction" of the present invention and the "backward" is an example of "the other side in the third direction" of the present invention.

Furthermore, a direction perpendicular to both the up-down direction and the front-rear direction is referred to as a "left-right direction". In the left-right direction, when the rear side is viewed from the front side, a direction from the right side to the left side is referred to as "leftward", and a direction from the left side to the right side is referred to as "rightward". Note that the "left-right direction" is an example of a "second direction" of the present invention. In addition, the "left" is an example of "one side in the second direction" of the present invention and the "right" is an example of "the other side in the second direction" of the present invention.

In addition, in this specification, in a predetermined component, a direction from a center part to an end part side of the component along a predetermined direction might be referred to as "outward" of the direction, and a direction from the end part side to the center part of the component along the predetermined direction might be referred to as "inward" of the direction.

In addition, in a positional relationship between any one to any other one of an azimuth, a line, and a surface, "parallel" indicates not only a state in which the two do not intersect with each other at all even if the two extend to any point, but also a state in which the two are substantially parallel to each other. In addition, "perpendicular" and "orthogonal" respectively refer to not only a state in which both intersect each other at 90 degrees, but also a state in which both are substantially perpendicular and a state in which both are substantially orthogonal. That is, each of "parallel", "perpendicular", and "orthogonal" includes a state in which there is an angular deviation in a positional relationship therebetween to such a degree that does not depart from the gist of the present invention.

In addition, "the same" (or "equal" or the like) indicates a state of being substantially the same (or equal), that is, includes a state in which there is an error (in other words, tolerance) to such a degree that does not depart from the gist of the invention.

Note that the above-described matters are merely used for explanation and are not intended to limit actual positional relationships, directions, names, and the like.

### 1-1. Battery Device 100

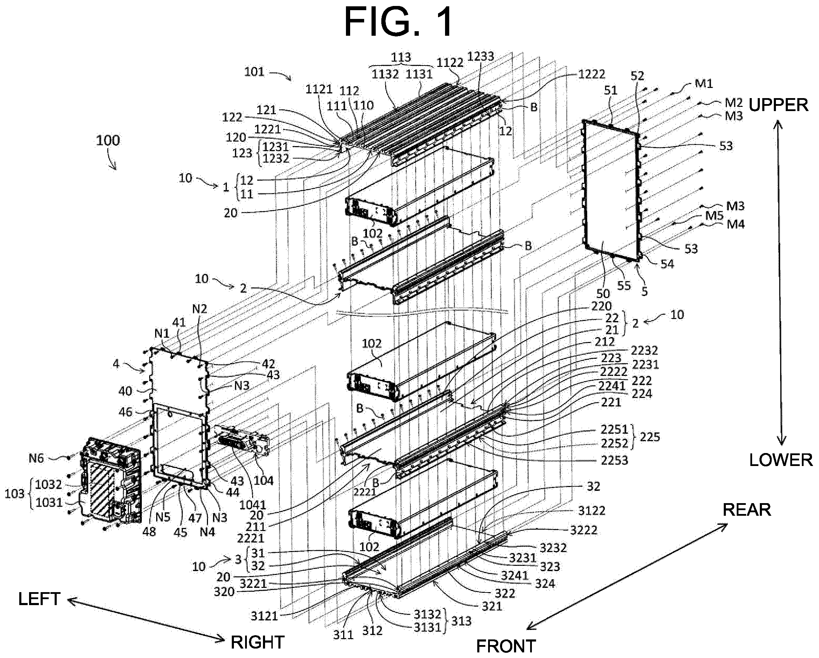

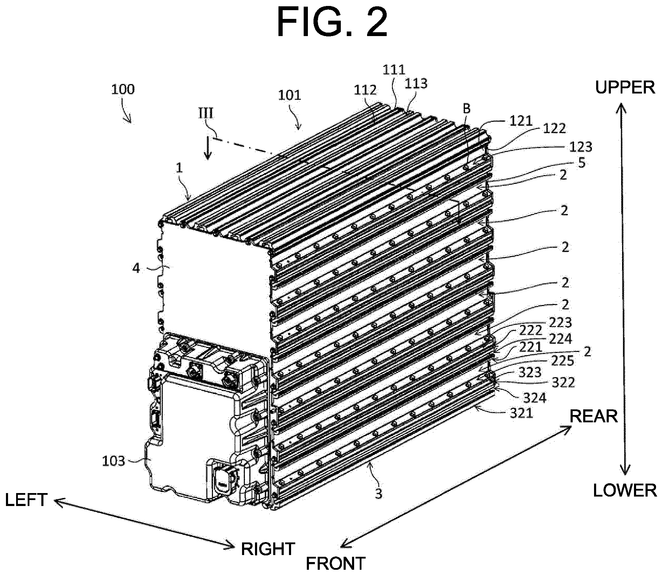

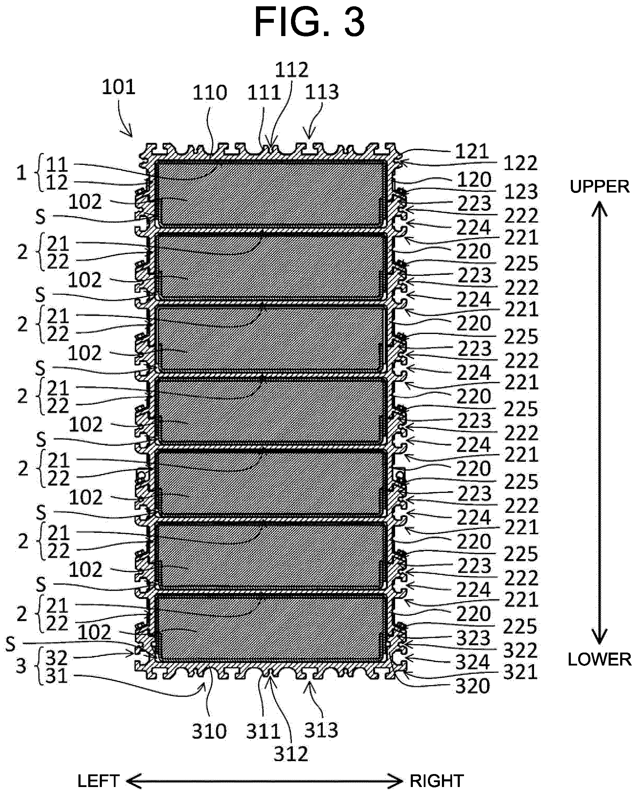

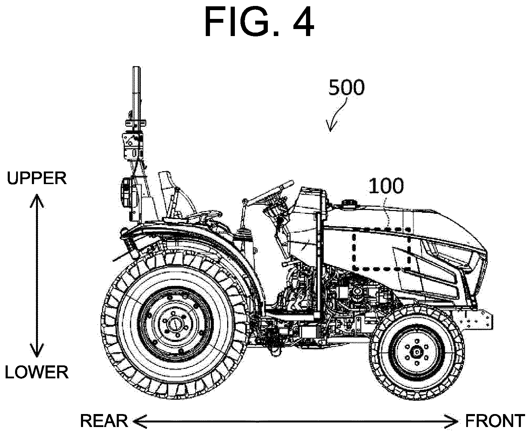

FIG. 1 is an exploded perspective view illustrating a configuration example of a battery device 100 according to this Embodiment. FIG. 2 is an appearance view of the battery device 100 according to this Embodiment. FIG. 3 is a sectional view of the battery device. FIG. 4 is a schematic view illustrating an example of a vehicle 500 on which the battery device 100 is mounted. Note that FIG. 3 illustrates a sectional view of a case in which the battery device 100 is cut along a virtual plane including a one-dot chain line III in FIG. 2 and perpendicular to the up-down direction.

The battery device 100 is a power-supply device mounted on a vehicle 500. That is, the vehicle 500 includes the battery device 100. In addition, the vehicle 500 is a work vehicle such as a tractor, as shown in FIG. 4 in this Embodiment. However, this exemplification is not limiting, and the vehicle 500 only needs to be a moving object, which is movable with a person or an object mounted thereon such as, for example, a boat, a vehicle, an aircraft, or the like. Alternatively, the battery device 100 may be applied to a field other than the vehicle 500 and for example, may be used as a general power-supply device.

The battery device 100 includes a battery case 101, a battery module 102, an interface box 103, and a connector portion 104. The battery case 101 accommodates the battery module 102 therein such that the battery module 102 is capable of being inserted and removed. The battery module 102 is a chargeable/dischargeable secondary battery. Although not particularly limited, a lithium-ion secondary battery, a sodium-ion battery, an all-solid-state battery, a lead storage battery, a nickelcadmium storage battery, or the like can be employed as the battery module 102. The battery modules 102 are provided in plural in this Embodiment, but the number of the battery modules may be single.

The battery case 101 accommodates the battery module 102 in an air-coolable manner in this Embodiment. For example, the battery case 101 is made of a metal such as aluminum or an alloy thereof and also functions as a heat sink to discharge heat transferred from the battery module 102 to the outside.

The battery device 100 can be arbitrarily and easily added by selecting a heating function, a cooling function, or the like as an option.

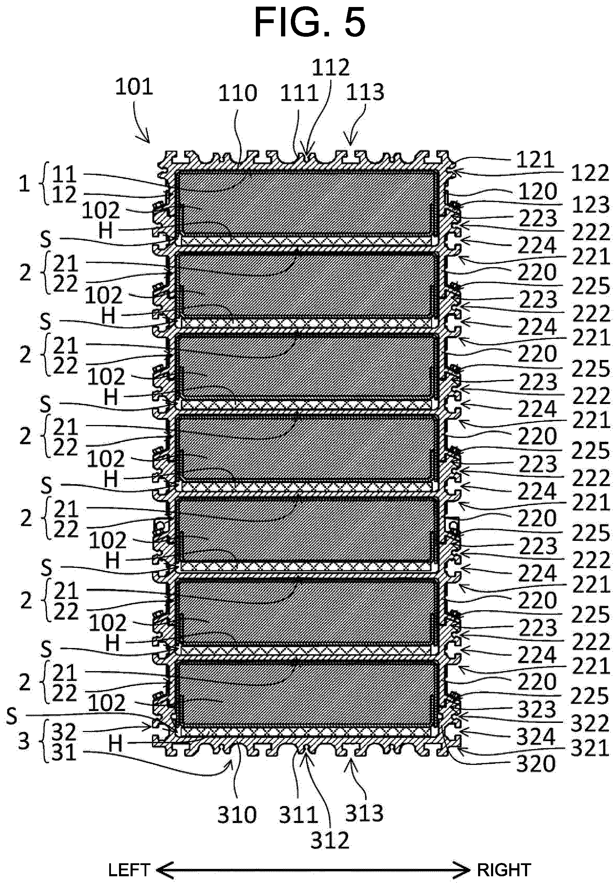

For example, to the battery device 100, a heating function can be easily added by incorporating an additional optional member in the battery case 101. This allows usage of the battery device 100 even in a cold region. The optional members in this case include a heater H, a temperature sensor (not shown), and the like. The battery case 101 accommodates the battery module 102 together with the heater H, the temperature sensor, and the like (see FIG. 5). Electric power for the heater H and the temperature sensor is supplied from, for example, the battery module 102. Note that the heater H is disposed on a lower side of the battery module 102 in FIG. 5, but this exemplification is not limiting, and the heater H may be disposed on an upper side of the battery module 102, or may be disposed on both sides in the up-down direction. In addition, the heater H may be disposed at least on one side in the left-right direction of the battery module 102.

In addition, to the battery device 100, a cooling function can be easily added by incorporating other additional optional members in the battery case 101. As a result, the battery device 100 can be used in an extremely hot area, and overheating of the battery module 102 can be prevented. For example, when a water cooling function is to be added, the additional optional member includes a plate-shaped water-cooling plate, a pipe, a temperature sensor, and the like. The battery case 101 accommodates, similarly to the addition of the heating function (see FIG. 5), the battery module 102 in an accommodation space S together with the water-cooling plate, the temperature sensor, and the like. For example, the water-cooling plate is disposed on at least one side of the battery module 102 in the up-down direction and/or at least one side in the left-right direction. The pipe includes a water supply pipe for supplying the cooling water to the water-cooling plate, a drain pipe for discharging the cooling water discharged from the water-cooling plate to the outside, and the like. These are accommodated in, for example, a space between a front end part of a plate portion 20 including a first recessed portion 211, which will be described later, and the front plate 4 and/or a space between a rear end part of the plate portion 20 including a second recessed portion 212, which will be described later and the rear plate 5. A radiator (heat exchanger), a reservoir, a pump, and the like are connected to the above-described pipe. These are, for example, disposed outside the battery case 101, supplied with electric power from the battery module 102, and connected in series. As a result, the cooling water is circulated. For example, the cooling water discharged from the cooling plate to the drain pipe is cooled by the radiator and stored in the reservoir.

The stored cooling water is sent out to the water supply pipe by the pump and supplied to the cooling plate in the battery module 102. Note that the optional member of the cooling function may include a cooling plate having a Peltier element or the like. The cooling plate can be disposed similarly to the water cooling plate.

Subsequently, the interface box 103 accommodates an electric component 1032 inside a sealing cover 1031. The sealing cover 1031 is connected to the surface of the battery case 101 by screwing, for example, via a sealing member (not shown) such as a gasket, an O-ring or the like. The electric component 1032 includes, for example, a PMU (pack management unit) a fuse, and the like. In addition, the interface box 103 has a connection terminal for the battery module 102, an external connection terminal, a charging port, and the like. The connector portion 104 electrically connects the battery module 102 and the electric component 1032. For example, the connector portion 104 attached to the battery case 101 is connected to a connection terminal for the battery module 102 and electrically connects the electric component 1032 in the interface box 103 and the battery module 102. In addition, the external connection terminal of the interface box 103 is disposed on the sealing cover 1031 and connects the electric component 1032, the battery module 102, and the like to a control device, an external device requiring power supply, and the like. Note that the control device controls the battery device 100 and controls, for example, the battery module 102, the electric component 1032 in the interface box 103, and the like. In addition, the charging port can be electrically connected to an external power source (such as a commercial power network) and transmits electric power supplied from the external power source to the battery module 102 via the connector portion 104 in accordance with the control of the control device.

In this Embodiment, the interface box 103 is disposed outside the battery case 101. For example, the interface box 103 is attached to a front surface of the front plate 4 in this Embodiment. However, this exemplification is not limiting, and the interface box 103 may be disposed outside the battery case 101 away from the battery case 101 and may be connected to the connector portion 104 through a wire. In this way, it is not necessary to disassemble the battery case 101 at the time of maintenance of the interface box 103 (particularly, the electric component 1032 and the like). For example, the connection (screwing) of the sealing cover 1031 to the battery case 101 is removed, and the connection terminal for the battery module 102 is removed from the connector portion 104. As a result, the interface box 103 itself can be separated from the battery case 101. Therefore, workability such as maintenance of the interface box 103 can be improved. In addition, the interface box 103 can be easily attached to the battery case 101.

### 1-2. Battery Case 101

A configuration example of the battery case 101 will be described with reference to Figs. 1 to 3.

The battery case 101 of the battery device 100 includes a plurality of case members 10 and the accommodation space S.

The plurality of case members 10 are stacked in the up-down direction. Note that the "case member 10" is simply a name indicating any or all of an upper case member 1, a middle case member 2, and a bottom case member 3, which will be described later. Preferably, the case member 10 is an extrusion molded product extending in the front-rear direction. For example, a constituent element protruding from the surface of the case member 10 as viewed from the front-rear direction extends from the front end part to the rear end part of the case member 10. However, this exemplification does not exclude such a configuration that at least one case member 10 is not an extrusion molded product extending in the front-rear direction.

The accommodation space S is formed inside the battery case 101 and can accommodate the battery module 102 between the two case members 10 stacked adjacently to each other in the vertical direction. In detail, the accommodation space S is disposed between two case members 10 stacked adjacently to each other in the up-down direction.

In addition, the battery case 101 of the battery device 100 further includes a front plate 4 and the rear plate 5. The front plate 4 covers front end parts of the plurality of case members 10. The rear plate 5 covers rear end parts of the plurality of case members 10.

In this Embodiment, the plurality of case members 10 include an upper case member 1, a middle case member 2, and a bottom case member 3. The upper case member 1, the middle case member 2, and the bottom case member 3 are stacked and coupled in this order from the upper side to the lower side. In addition, in this Embodiment, the numbers of the upper case members 1 and the bottom case members 3 are one, respectively, but the number of the middle case members 2 is six. However, this exemplification is not limiting, and the number of the middle case members 2 may be single or may be plural other than 6.

Each of two case members 10 stacked adjacently to each other in the up-down direction has the plate portion 20 spreading in a direction intersecting the up-down direction. Note that the "plate portion 20" is simply a name indicating any or all of a plate portion 110 of the upper case member 1, a plate portion 21 of the middle case member 2, and a plate portion 310 of the bottom case member 3, which will be described later.

In addition, in the two case members 10 stacked adjacently to each other in the up-down direction, the case member 10 on an upper side further includes first coupling portions 123 and 225. The first coupling portions 123 and 225 are disposed on both end sides in the left-right direction of the plate portion 20 of the case member 10 on the upper side.

In addition, in the two case members 10 stacked adjacently to each other in the up-down direction, the case member 10 on a lower side further includes second coupling portions 223 and 323. The second coupling portions 223 and 323 are disposed on both end sides in the left-right direction of the case member 10 on the lower side.

The second coupling portions 223 and 323 of the case member 10 on the lower side are coupled to the first coupling portions 123 and 225 of the case member 10 on the upper side. In this way, by changing the configuration of the battery case 101 (in particular, the total number of the middle case members 2), it is possible to easily adjust the size of the battery case 101 in the up-down direction, which greatly affects the size of the battery device 100. That is, the size of the battery device 100 can be adjusted easily. In addition, by means of the above-described change, the number of battery modules 102 that can be accommodated in the battery case 101 (upper limit) can be also easily changed. Therefore, an output voltage, power capacity, and the like of the battery device 100 can be easily adjusted in accordance with the number and connection method (series connection and/or parallel connection) of the battery modules 102 accommodated in the battery case 101. Therefore, the specification of the battery device 100 can be easily changed.

For example, in the upper case member 1 and the middle case member 2 immediately below that, which are stacked adjacently to each other in the up-down direction, the second coupling portion 223 of the middle case member 2 on the lower side is coupled to the first coupling portion 123 of the upper case member 1 on the upper side. In this way, by stacking and coupling the upper case member 1 and the middle case member 2 immediately below the upper case member 1 to each other, the accommodation space S in which the battery module 102 can be accommodated can be formed between the both in the up-down direction.

In addition, in the two middle case members 2 stacked adjacently to each other in the up-down direction, the second coupling portion 223 of the lower-side middle case member 2 is coupled to the first coupling portion 225 of the upper-side middle case member 2. In this way, by stacking and coupling the two middle case members 2 adjacently to each other, it is possible to form the accommodation space S capable of accommodating the battery module 102 between the both in the up-down direction.

In addition, in the middle case member 2 and the bottom case member 3 immediately below that, which are stacked adjacently to each other in the up-down direction, the second coupling portion 323 of the bottom case member 3 on the lower side is coupled to the first coupling portion 225 of the middle case member 2 on the upper side. In this way, by stacking and coupling the middle case member 2 and the bottom case member 3 immediately below that, the accommodation space S in which the battery module 102 can be accommodated can be formed between the both in the up-down direction.

Note that the battery case 101 can be also configured without the middle case member 2. For example, when the number of the battery modules 102 is single, the middle case member 2 is not included in the plurality of case members 10 and is omitted. In this case, in the upper case member 1 and the bottom case member 3 immediately below that, which are stacked adjacently to each other in the up-down direction, the second coupling portion 323 of the bottom case member 3 on the lower side is coupled to the first coupling portion 123 of the upper case member 1 on the upper side. In this way, by stacking and coupling the upper case member 1 and the bottom case member 3 immediately below that, it is possible to form the accommodation space S in which the battery module 102 can be accommodated between the both in the up-down direction.

### 1-2-1. Upper Case Member 1

The upper case member 1 is an upper cover of the battery case 101 and is disposed at the uppermost stage of the case member 10 (that is, the uppermost side). Note that the upper case member 1 is an example of the "first case member" in the present invention. The upper case member 1 includes the top plate portion 11 and a pair of left and right first wall portions 12.

### 1-2-1-1. Top Plate Portion 11

The top plate portion 11 includes the plate portion 110, a ridge portion 111, and a groove portion 112. The plate portion 110 is the plate portion 20 of the upper case member 1. The plate portion 110 has a plate shape spreading in a direction intersecting the up-down direction, and spreads in the front-rear direction and the left-right direction in this Embodiment. The ridge portion 111 protrudes upward on the upper surface of the top plate portion 11 and extends in the front-rear direction. In this Embodiment, the ridge portion 111 linearly extends from the front end part to the rear end part of the upper surface of the top plate portion 11. The groove portion 112 is disposed on the upper surface of the ridge portion 111, is recessed downward, and extends in the front-rear direction from the front end part to the rear end part of the ridge portion 111. That is, the groove portion 112 opens at the front end part and the rear end part of the ridge portion 111. In addition, the groove portion 112 has a circular internal space as viewed from the front-rear direction and opens upward from the front end part to the rear end part of the ridge portion 111. In other words, the inner peripheral surface of the groove portion 112 has a C-shaped cylindrical shape that extends in the front-rear direction and opens upward. Furthermore, a female screw groove (not shown) is disposed on the inner peripheral surface of a front end part and the inner peripheral surface of a rear end part of the groove portion 112.

That is, the front end part of the groove portion 112 is a female screw part into which a male screw N1 can be screwed, and functions as a first fixing portion 1121 for attaching the front plate 4 to the top plate portion 11. The rear end part of the groove portion 112 is a female screw part into which a male screw M1 can be screwed, and functions as a second fixing portion 1122 for attaching the rear plate 5 to the top plate portion 11.

Note that the configurations of the first fixing portion 1121 and the second fixing portion 1122 are not limited to the above-described exemplification and may take various forms as long as they are disposed at the front end part and the rear end part of the ridge portion 111, respectively. For example, the groove portion 112 does not have to be disposed in the ridge portion 111. At this time, the first fixing portion 1121 into which the male screw N1 is screwed may be a female screw part which is disposed at the front end part of the ridge portion 111 and is recessed rearward. The second fixing portion 1122 into which the male screw M1 is screwed may be a female screw part which is disposed at the rear end part of the ridge portion 111 and is recessed forward.

In addition, in this Embodiment, four ridge portions 111 (and groove portions 112) are aligned in the left-right direction. However, this example is not limiting, and the number of the ridge portions 111 (and the groove portions 112) may be single or may be plural other than four.

In addition, the top plate portion 11 further includes a connecting portion 113. The connecting portion 113 is a constituent element for connection to a fixing jig, another battery device 100, or the like. For example, when the battery device 100 is fixed to a predetermined place, the connecting portion 113 is connected to the fixing jig. Furthermore, the connecting portion 113 can be connected to another battery case 101 and in particular, it can be connected to the connecting portion 113 (or connecting portions 224, 313, and 324, which will be described later) of another battery case 101. By the connection, the connecting portion 113 connects the battery device 100 to another battery device 100.

In this Embodiment, the connecting portion 113 includes, for example, a protruding portion 1131 and a T-shaped groove 1132. The protruding portion 1131 protrudes upward on the upper surface of the top plate portion 11 and extends in the front-rear direction. In this Embodiment, the protruding portion 1131 linearly extends from the front end part to the rear end part of the upper surface of the top plate portion 11. The T-shaped groove 1132 is disposed on the upper surface of the protruding portion 1131, is recessed downward, and extends in the front-rear direction from the front end part to the rear end part of the protruding portion 1131. That is, the T-shaped groove 1132 opens at the front end part and the rear end part of the protruding portion 1131. In addition, the T-shaped groove 1132 has an internal space with an inverted T-shape as viewed from the front-rear direction and opens upward from the front end part to the rear end part of the protruding portion 1131. Note that the internal space with the inverted T-shape is constituted by a vertical space extending downward from the upper surface of the protruding portion 1131 and a horizontal space extending leftward and rightward from the lower end part of the vertical space as viewed from the front-rear direction. That is, the lower end part of the vertical space is connected to a center part of the horizontal space.

For example, when the connecting portion 113 is connected to the fixing jig by screwing, a head part of a male screw is inserted from a front end part or a rear end part of the T-shaped groove 1132 and is disposed at a predetermined position in the front-rear direction by sliding. However, this Embodiment is not limited to this exemplification, and a part of the fixing jig may have a T-shape. At this time, the T-shaped part preferably extends in one direction (for example, the front-rear direction).

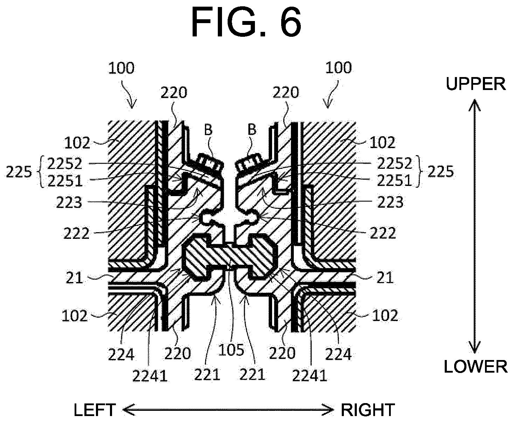

In addition, when the connecting portion 113 is connected to another battery device 100 (see FIG. 6), for example, a T-shaped part on one side of an H-shaped member 105 is inserted into the T-shaped groove 1132 of the connecting portion 113 from the front end part or the rear end part of the T-shaped groove 1132 and is fitted by sliding. On the other hand, the T-shaped part on the other side of the H-shaped member 105 is fitted into the T-shaped groove 1132 (or any one of T-shaped grooves 2241, 3132, and 3241, which will be described later) of another battery device 100 by being inserted from the front end part or the rear end part of the T-shaped groove 1132 by sliding. By these fitting structures, the battery device 100 is connected to another battery device 100 via the H-shaped member 105. Note that the H-shaped member 105 is a member having an H-shaped cross section and preferably extends in one direction perpendicular to the cross section (for example, the front-rear direction). For example, the H-shaped member 105 may be a bolt into which a nut is screwed or may be a member such as H-steel. However, the H-shaped member 105 may be made of metal or does not have to be made of metal. In the latter case, for example, the material may be made of a resin.

However, the configuration of the connecting portion 113 is not limited to the above-described exemplification and can take various forms as long as it can be connected to a fixing jig, another battery device 100, or the like.

### 1-2-1-2. First Wall Portion 12

Each of the pair of left and right first wall portions 12 extends downward from an end part in the left-right direction of the top plate portion 11 and spreads in the front-rear direction. Note that, in this Embodiment, the configuration of the wall portion 12 on the right side is the same as the configuration of the first wall portion 12 on the left side except that the pair of left and right first wall portions 12 are bilaterally symmetrical. Therefore, in the following, the configuration of the first wall portion 12 on the right side will be explained as a representative of the both.

The first wall portion 12 includes a wall member 120, a ridge portion 121, and a groove portion 122.

The wall member 120 is a plate-like member spreading in the front-rear direction and the left-right direction. In this Embodiment, the length of the wall member 120 in the front-rear direction is the same as the length of the top plate portion 11 in the front-rear direction.

The ridge portion 121 protrudes outward in the left-right direction on the first wall portion 12 and extends in the front-rear direction. In detail, the ridge portion 121 protrudes rightward from the right surface of the wall member 120 and extends from the front end part to the rear end part of the first wall portion 12. In this Embodiment, the ridge portion 121 linearly extends from the front end part to the rear end part of the right surface of the wall member 120.

The groove portion 122 is disposed on the right surface of the ridge portion 121, is recessed leftward, and extends in the front-rear direction from the front end part to the rear end part of the ridge portion 121. That is, the groove portion 122 opens at the front end part and the rear end part of the ridge portion 121. In addition, the groove portion 122 has a circular internal space as viewed from the front-rear direction and opens rightward from the front end part to the rear end part of the ridge portion 121. In other words, the inner peripheral surface of the groove portion 122 has a C-shaped cylindrical shape that extends in the front-rear direction and opens rightward. Furthermore, female screw grooves (not shown) are disposed on an inner peripheral surface of the front end part and an inner peripheral surface of the rear end part of the groove portion 122.

That is, the front end part of the groove portion 122 is a female screw part into which a male screw N2 can be screwed and functions as a first fixing portion 1221 for attaching the front plate 4 to the first wall portion 12. A rear end part of the groove portion 122 is a female screw part into which a male screw M2 can be screwed and functions as a second fixing portion 1222 for attaching the rear plate 5 to the first wall portion 12.

Note that the configurations of the first fixing portion 1221 and the second fixing portion 1222 are not limited to the above-described exemplifications and may take various forms as long as they are disposed at the front end part and the rear end part of the ridge portion 121, respectively. For example, the groove portion 122 does not have to be disposed in the ridge portion 121. At this time, the first fixing portion 1221 into which the male screw N2 is screwed may be a female screw part which is disposed at the front end part of the ridge portion 121 and is recessed rearward. The second fixing portion 1222 into which the male screw M2 is screwed may be a female screw part which is disposed at the front end part of the ridge portion 121 and is recessed rearward.

Note that the number of the ridge portions 121 (and the groove portions 122) disposed on the wall member 120 is single in this Embodiment, but this exemplification is not limiting, and a plurality of them may be aligned in the up-down direction.

In addition, the first wall portion 12 further has the first coupling portion 123. The first coupling portion 123 is coupled to the second coupling portion 223, which will be described later, on the right side of the middle case member 2, which is disposed immediately below the upper case member 1 in an overlapping manner. Note that the both are indirectly coupled to each other through a sealing member such as a viscous fluid (for example, grease) or an elastic body sheet in this Embodiment, but this exemplification is not limiting, and the both may be directly coupled to each other. The upper case member 1 and the middle case member 2 immediately below that are coupled to each other in the overlapping manner so that the accommodation space S for accommodating the battery module 102 is formed therein.

In this Embodiment, the first coupling portion 123 has a flange portion 1231, a recessed portion 1232, and a plurality of openings 1233.

The flange portion 1231 protrudes at least rightward from the right surface of the wall member 120 and extends in the front-rear direction from the front end part to the rear end part of the wall member 120. A base end part (root) of the flange portion 1231 is disposed below the ridge portion 121 and above a lower end part of the wall member 120. In addition, the flange portion 1231 has a plate-shape protruding diagonally downward to the right from the wall member 120 in this Embodiment, but this exemplification is not limiting and may have a hook shape protruding rightward as viewed from the front-rear direction.

For example, the flange portion 1231 may be constituted by a first plate that protrudes at least rightward from the wall member 120 and extends in the front-rear direction, and a second plate that extends at least downward from a right end part of the first plate and spreads in the front-rear direction.

The recessed portion 1232 is formed between the lower end part of the wall member 120 and the flange portion 1231. The recessed portion 1232 is recessed upward and extends in the front-rear direction from the front end part to the rear end part of the both. When the upper case member 1 is stacked on and coupled to the middle case member immediately below that, a rail portion 2231 of the second coupling portion 223 of the middle case member 2 is fitted and accommodated in the recessed portion 1232.

The plurality of openings 1233 are disposed in the flange portion 231 and aligned in the front-rear direction. Each of the openings 1233 penetrates the flange portion 231 in its thickness direction (for example, diagonally downward to the left). Note that the openings 1233 only need to be disposed in the flange portion 1231 at least on the front end part and the rear end part (as well as at the center part in the front-rear direction). In addition, each of the openings 1233 is aligned at equal intervals in this Embodiment, but this exemplification is not limiting, and they may be aligned at different intervals. When the upper case member 1 is stacked on and coupled to the middle case member 2 immediately below the upper case member 1, a bolt B screwed into a female screw part 2232 of the second coupling portion 223 of the middle case member 2 is inserted into the opening 1233.

In this Embodiment, the upper case member 1 is an extrusion molded product extending in the front-rear direction. For example, a constituent element protruding from the surface of the upper case member 1 as viewed from the front-rear direction extends from the front end part to the rear end part of the upper case member 1. In addition, the cross-sectional shape of (a most part, excluding the opening 1233, the groove portion 112, and the female screw part of the groove portion 122, of) the upper case member 1 viewed from the front-rear direction is the same over the front-rear direction. Therefore, (the most part of) the upper case member 1 can be manufactured by extrusion molding using aluminum or an alloy thereof as a material. Furthermore, a width in the front-rear direction of the upper case member 1 can be easily set by adjusting a cutting position of the extrusion molded body. Note that the opening 1233, the groove portion 112, the female screw part of the groove portion 122, and the like can be formed by drilling, tapping, or the like on the cut-down extrusion molded body. Therefore, even if the upper case member 1 has a complicated surface shape, it can be easily manufactured. Since the cost can be reduced, productivity of the upper case member 1 can be improved. However, this exemplification does not exclude such a configuration that the upper case member 1 is not an extrusion molded product extending in the front-rear direction.

### 1-2-2. Middle Case Member 2

The middle case member 2 is a member that partitions the inside of the battery case 101 and is disposed between the upper case member 1 and the bottom case member 3. As described above, in this Embodiment, the middle case members 2 are provided in plural. Each of the middle case members 2 is the same product. For example, each of the middle case members 2 has the same shape, structure, dimensions, and the like. In addition, the middle case member 2 is an example of the "third case member" in the present invention.

As in this Embodiment, when the middle case members 2 are provided in plural, the middle case member 2 on the uppermost stage is stacked immediately below the upper case member 1 and coupled thereto. The upper case member 1 and the middle case member 2 on the uppermost stage form the accommodation space S on the uppermost stage. The middle case member 2 on the lowermost stage is stacked on and coupled to the bottom case member 3. The middle case member 2 on the lowermost stage and the bottom case member 3 form the accommodation space S on the lowermost stage. In addition, the two middle case members 2 that are stacked adjacent to each other in the up-down direction form the accommodation space S on a middle stage.

Note that the exemplification of this Embodiment is not limiting, but when the number of the middle case member 2 is single, the middle case member 2 is stacked on and coupled to the upper case member 1 immediately below and forms the accommodation space S of the upper stage together with the upper case member 1. In addition, the middle case member 2 is stacked on and coupled to the bottom case member 3 and forms the accommodation space S on the lower stage together with the bottom case member 3.

The middle case member 2 includes a plate portion 21 and a pair of left and right second wall portions 22. The second wall portions 22 are disposed at the left end part and the right end part of the plate portion 21 of the middle case member 2.

### 1-2-2-1. Plate portion 21

The plate portion 21 has a plate shape spreading in a direction intersecting the up-down direction and spreads in the front-rear direction and the left-right direction in this Embodiment. The battery module 102 is fixed to the upper surface of the plate portion 21 by screwing or the like.

Note that the position in the front-rear direction of the front end part of the plate portion 21 may be the same as the position in the front-rear direction of the front end part of the second wall portion 22 as in this Embodiment or may be in the rear of the position in the front-rear direction of the front end part of the second wall portion 22. In addition, the position in the front-rear direction of the rear end part of the plate portion 21 may be the same as the position in the front-rear direction of the rear end part of the second wall portion 22 as in this Embodiment or may be in the front of the position in the front-rear direction of the rear end part of the second wall portion 22.

The plate portion 21 includes the first recessed portion 211 and the second recessed portion 212. The first recessed portion 211 is recessed rearward in the front end part of the plate portion 21. The second recessed portion 212 is recessed forward in the rear end part of the plate portion 21. The first recessed portion 211 and the second recessed portion 212 are opened in the upper surface and the lower surface of the plate portion 21. The accommodation spaces S adjacent to each other in the up-down direction are connected through the first recessed portion 211 and the second recessed portion 212. As a result, the battery modules 102 accommodated in the respective accommodation spaces S can be electrically connected to each other via at least one of the first recessed portion 211 and the second recessed portion 212. Furthermore, wiring of an electric system, piping for cooling, and the like can be disposed in at least one of the first recessed portion 211 and the second recessed portion 212.

Note that the plate portion 21 only needs to include at least one of the first recessed portion 211 and the second recessed portion 212. For example, the exemplification of this Embodiment does not exclude a configuration in which the plate portion 21 does not have either one of the first recessed portion 211 and the second recessed portion 212 in at least one middle case member 2. That is, either one of the both may be omitted.

In addition, in this Embodiment, the first recessed portion 211 is constituted by an outer edge of the front end part of the plate portion 21, and the second recessed portion 212 is constituted by an outer edge of the rear end part of the plate portion 21. However, this exemplification is not limiting, and in at least one middle case member 2, the first recessed portion 211 may be constituted by the outer edge of the front end part of the plate portion 21 and a front side part of at least either one of the pair of left and right second wall portions 22. In addition, the second recessed portion 212 may be constituted by an outer edge of the rear end part of the plate portion 21 and a rear side part of at least either one of the pair of left and right second wall portions 22.

### 1-2-2-2. Second Wall Portion 22

Each of the pair of left and right second wall portions 22 extends upward and downward from an end part in the left-right direction of the plate portion 21, respectively, and spreads in the front-rear direction. Note that, in this Embodiment, the configuration of each of the pair of left and right second wall portions 22 is the same except that they are bilaterally symmetrical. Therefore, in the following, the configuration of the second wall portion 22 on the right side will be explained as a representative of the both.

The second wall portion 22 includes a wall member 220, a ridge portion 221, a groove portion 222, a second coupling portion 223, the connecting portion 224, and a first coupling portion 225.

The wall member 220 is a plate-like member spreading in the front-rear direction and the up-down direction. The length in the front-rear direction of the wall member 220 is the same as the length in the front-rear direction of the plate portion 21 in this Embodiment, but this exemplification is not limiting and it may be longer than the length in the front-rear direction of the plate portion 21.

The ridge portion 221 protrudes outward in the left-right direction on the second wall portion 22 and extends in the front-rear direction. In detail, the ridge portion 221 protrudes rightward from the upper side on the right surface of the wall member 220 and extends from the front end part to the rear end part of the second wall portion 22. In this Embodiment, the ridge portion 221 linearly extends from the front end part to the rear end part on the right surface of the wall member 220.

The groove portion 222 is disposed on the right surface of the ridge portion 221, is recessed leftward and extends in the front-rear direction from the front end part to rear end part of the ridge portion 221. That is, the groove portion 222 opens at the front end part and the rear end part of the ridge portion 221. In addition, the groove portion 222 has a circular internal space as viewed from the front-rear direction and opens rightward from the front end part to the rear end part of the ridge portion 221. In other words, the inner peripheral surface of the groove portion 222 has a C-shaped cylindrical shape that extends in the front-rear direction and opens rightward. Furthermore, the female screw groove (not shown) is disposed on an inner peripheral surface of the front end part and an inner peripheral surface of the rear end part of the groove portion 222.

That is, the front end part of the groove portion 222 is a female screw part into which a male screw N3 can be screwed and functions as a first fixing portion 2221 for attaching the front plate 4 to the second wall portion 22. A rear end part of the groove portion 222 is a female screw part into which the male screw M3 can be screwed and functions as a second fixing portion 2222 for attaching the rear plate 5 to the second wall portion 22.

Note that the configurations of the first fixing portion 2221 and the second fixing portion 2222 are not limited to the above-described exemplifications and may take various forms as long as they are disposed at the front end part and the rear end part of the ridge portion 221, respectively. For example, the groove portion 222 does not have to be disposed in the ridge portion 221. At this time, the first fixing portion 2221 into which the male screw N3 is screwed may be a female screw part which is disposed at the front end part of the ridge portion 221 and is recessed rearward. The second fixing portion 2222 into which the male screw M3 is screwed may be a female screw part which is disposed at the rear end part of the ridge portion 221 and is recessed forward.

The second coupling portion 223 is disposed above the groove portion 222 and is coupled to the first coupling portions 123 and 225 of the case member 10, which is stacked on and disposed directly above the middle case member 2. For example, in the case of the middle case member 2 on the uppermost stage, the second coupling portion 223 is coupled to the first coupling portion 123 of the upper case member 1. In the case of the middle case member 2 on the middle stage, the second coupling portion 223 is coupled to the first coupling portion 225 of the middle case member 2 on the upper stage, which is stacked adjacently in the up-down direction. Note that, in this Embodiment, the both are indirectly coupled to each other via a sealing member such as a fluid with viscosity (for example, grease) or an elastic body sheet, but this exemplification is not limiting and they may be directly coupled to each other. The upper case member 1 or the middle case member 2 on the upper stage and the middle case member 2 immediately below that are stacked and coupled to each other so that the accommodation space S for accommodating the battery module 102 is formed therein.

In this Embodiment, the second coupling portion 223 includes the rail portion 2231 and a plurality of the female screw parts 2232.

The rail portion 2231 protrudes upward from the upper end part of the ridge portion 221 and extends in the front-rear direction from the front end part to the rear end part of the ridge portion 221. When the middle case member 2 is stacked on and coupled to the case member 10 immediately above that, the rail portion 2231 is fitted and accommodated in the recessed portion 1232 (or a recessed portion 2252 to be described later) of the case member 10. Note that, between the inner surfaces of the recessed portions 1232, 2252 and the rail portion 2231, a seal member is interposed in this Embodiment. However, this exemplification does not exclude a configuration in which the sealing member is not interposed between the both.

The plurality of female screw parts 2232 are disposed on the upper surface of the rail portion 2231 and aligned in the front-rear direction. Each of the female screw parts 2232 extends at least downward. Note that the female screw part 2232 only needs to be disposed at least at the front end part and the rear end part (and the center part in the front-rear direction) of the rail portion 2231. In addition, the respective female screw parts 2232 are aligned at equal intervals in this Embodiment, but this exemplification is not limiting, and they may be aligned at different intervals. When being stacked on and coupled to the middle case member 2 of the case member 10 immediately above, the bolt B inserted into the openings 1233, 2253 of the first coupling portions 123, 225 of the case member 10 is screwed with the female screw part 2232. The middle case member 2 is coupled to the case member 10 immediately above that by a screwing structure of the bolt B with respect to the female screw part 2232.

Preferably, as in this Embodiment, the upper surface of the rail portion 2231 extends downward as it goes outward in the left-right direction. For example, in the second wall portion 22 on the right side, the upper surface of the rail portion 2231 extends downward and spreads in the front-rear direction as it goes rightward. In the second wall portion 22 on the left side, the upper surface of the rail portion 2231 extends downward and spreads in the front-rear direction as it goes leftward. As a result, the female screw part 2232 which extends inward in the left-right direction as it goes downward can be formed easily. For example, in the second wall portion 22 on the right side, by inserting the bolt B diagonally downward to the left from the diagonally upper right side into the openings 1233, 2253 and the female screw part 2232, the bolt B can be screwed into the female screw part 2232. In addition, in the second wall portion 22 on the left side, by inserting the bolt B diagonally downward to the right from the diagonally upper left side into the openings 1233, 2253 and the female screw part 2232, the bolt B can be screwed into the female screw part 2232. That is, the bolt B can be inserted and screwed in a state in which the head of the bolt B is inclined outward in the left-right direction. Therefore, a coupling work by the bolt B between the case members 10 stacked adjacent to each other in the up-down direction can be easily performed. Therefore, assembling workability of the battery case 101 can be improved. Note that this feature can also be applied to a rail portion 3231 of the bottom case member 3. However, this exemplification does not exclude a configuration in which the upper surface of the rail portion 2231 (or 3231) does not extend downward as it goes outward in the left-right direction. For example, the upper surface of the rail portion 2231 (or 3231) may be parallel to the left-right direction.

Similarly to the connecting portion 113, the connecting portion 224 is a constituent element for connection to a fixing jig or another battery device 100. For example, when the battery device 100 is fixed to a predetermined place, the connecting portion 113 is connected to the fixing jig. In addition, the connecting portion 224 can be connected to the connecting portion 224 (or connecting portions 113, 313, and 324, which will be described later) of another battery device 100, and the battery device 100 is connected to another battery device 100 by the connection.

In this Embodiment, the connecting portion 224 includes the T-shaped groove 2241. The T-shaped groove 2241 is disposed on the upper surface of the protruding portion 1131 below the groove portion 222 and the second coupling portion 223, is recessed leftward, and extends in the front-rear direction from the front end part to the rear end part of the ridge portion 221. That is, the T-shaped groove 2241 opens at the front end part and the rear end part of the ridge portion 221. In addition, the T-shaped groove 2241 has an internal space with a T shape rotated by 90 degrees in a counterclockwise direction (that is, in a left rotation) as viewed from the front side to the rear side, and is opened rightward from the front end part to the rear end part of the ridge portion 221. Note that the internal space with the T-shape is constituted by a horizontal space extending leftward from the right surface of the ridge portion 221 and a vertical space extending upward and downward from a left end part of the horizontal space as viewed from the front-rear direction. That is, the left end part of the horizontal space is connected to the center part of the vertical space.

Note that the connection by the connecting portion 224 to the fixing jig or another battery device 100 is in the same manner as the connecting portion 113. Therefore, explanation on the configuration of the connection will be omitted.

In addition, in this Embodiment, the connecting portion 224 is disposed below the groove portion 222. However, this exemplification does not exclude a configuration in which the connecting portion 224 is disposed above the groove portion 222 and below the second coupling portion 223.

In addition, in this Embodiment, the groove portion 222, the second coupling portion 223, and the connecting portion 224 are disposed on the same constituent element (that is, the ridge portion 221). However, this exemplification is not limiting, and at least one of them may be disposed in a configuration different from that of the ridge portion 221. For example, three pieces of the ridge portions 221 may be disposed on the upper side of the right surface of the wall member 220, and the groove portion 222, the second coupling portion 223, and the connecting portion 224 may be disposed on the different ridge portions 221, respectively. Alternatively, two pieces of the ridge portions 221 may be disposed on the upper side of the right surface of the wall member 220, two pieces of the groove portion 222, the second coupling portion 223, and the connecting portion 224 may be disposed on one ridge portion 221, and the remaining one may be disposed on the other ridge portion 221.

In addition, in this Embodiment, the numbers of the ridge portions 221, the groove portions 222, the second coupling portions 223, and the connecting portions 224 disposed on the wall member 120 are all single. However, this exemplification is not limiting, and the ridge portions 221 (and at least any one of the groove portion 222, the second coupling portion 223, and the connecting portion 224) disposed on the wall member 120 may be plural and may be aligned in the up-down direction.

In addition, the configuration of the connecting portion 224 is not limited to the above-described exemplification and may take various forms as long as it can be connected to the fixing jig, another battery device 100, or the like.

The first coupling portion 225 is disposed below the ridge portion 221 and is coupled to the second coupling portion 223 (or the second coupling portion 323) on the right side of the case member 10 stacked on and disposed directly below the middle case member 2. For example, in the case of the middle case member 2 on the lowermost stage, the first coupling portion 225 thereof is coupled to the second coupling portion 323 of the bottom case member 3. In the case of the middle case member 2 on the middle stage, the first coupling portion 225 thereof is coupled to the second coupling portion 223 of the middle case member 2 on the lower stage, which is stacked adjacently in the up-down direction. Note that the both are indirectly coupled to each other through a sealing member such as a fluid having viscosity (for example, grease) or an elastic body sheet in this Embodiment, but this exemplification is not limiting, and the both may be directly coupled to each other. By stacking and coupling the middle case member 2 on the upper stage or the bottom case member 3 and the middle case member 2 immediately above that, the accommodation space S for accommodating the battery module 102 is formed therein.

In this Embodiment, the first coupling portion 225 includes a flange portion 2251, a recessed portion 2252, and a plurality of openings 2253. The configuration of the first coupling portion 225 (, the flange portion 2251, the recessed portion 2252, and the plurality of openings 2253) is similar to the configuration of the first coupling portion 123 (, the flange portion 1231, the recessed portion 1232, and the plurality of openings 1233) of the upper case member 1. Therefore, explanation thereof will be omitted.

Note that, in this Embodiment, the ridge portion 221 is disposed on the upper side of the second wall portion 22. In addition, the second coupling portion 223, the groove portion 222, and the connecting portion 224 are disposed on the ridge portion 221. However, this exemplification is not limiting, and the ridge portion 221 may be disposed on the lower side of the second wall portion 22. Furthermore, the first coupling portion 225 and at least either one of the groove portion 222 and the connecting portion 224 may be disposed on the ridge portion 221.

In this Embodiment, the middle case member 2 is an extrusion molded product extending in the front-rear direction. For example, a constituent element protruding from the surface of the middle case member 2 as viewed from the front-rear direction extends from the front end part to the rear end part of the middle case member 2. In addition, the cross-sectional shape of (a most part, excluding the first recessed portion 211, the second recessed portion 212, the opening 2253, and the female screw part of the groove portion 222, of) the middle case member 2 viewed from the front-rear direction is the same over the front-rear direction. Therefore, (the most part of) the middle case member 2 can be manufactured by extrusion molding using metal such as aluminum or an alloy thereof as a material.

Furthermore, a width in the front-rear direction of the middle case member 2 can be easily set by adjusting a cutting position of the extrusion molded body. Note that the opening 2253, the female screw part of the groove portion 222, and the like can be formed by drilling, tapping, or the like on the cut-down extrusion molded body. Therefore, even if the middle case member 2 has a complicated surface shape, it can be easily manufactured. Since the cost can be also reduced, productivity of the middle case member 2 can be improved. However, this exemplification does not exclude such a configuration that at least one middle case member 2 is not an extrusion molded product extending in the front-rear direction.

### 1-2-3. Bottom Case Member 3

The bottom case member 3 is a lower cover of the battery case 101 and is disposed on the lowermost stage (that is, the lowermost side) of the case member 10. Note that the bottom case member 3 is an example of the "second case member" in the present invention. The bottom case member 3 includes a bottom plate portion 31 and a pair of left and right third wall portions 32.

### 1-2-3-1. Bottom Plate Portion 31

The bottom plate portion 31 includes a plate portion 310, a ridge portion 311, a groove portion 312, and a connecting portion 313. The plate portion 310 is the plate portion 20 of the bottom case member 3. The plate portion 310 has a plate shape spreading in a direction intersecting the up-down direction and spreads in the front-rear direction and the left-right direction in this Embodiment. The ridge portion 311 protrudes downward from the plate portion 310 and extends in the front-rear direction from the front end part to the rear end part of the plate portion 310. A front end part of the groove portion 312 is a female screw part into which a male screw N5 can be screwed and functions as a first fixing portion 3121 for attaching the front plate 4 to the bottom plate portion 31. A rear end part of the groove portion 312 is a female screw part into which a male screw M5 can be screwed and functions as a second fixing portion 3122 for attaching the rear plate 5 to the bottom plate portion 31. In addition, in this Embodiment, the connecting portion 313 includes, for example, a protruding portion 3131 and a T-shaped groove 3132. Note that the configuration of the connecting portion 113 is not limited to the exemplification of this Embodiment and may take various forms as long as it can be connected to a fixing jig, another battery device 100, or the like.

In addition, in this Embodiment, four pieces of the ridge portions 311 (and groove portions 312) are aligned in the left-right direction. However, this example is not limiting, and the number of the ridge portions 311 (and the groove portions 312) may be single or may be plural other than 4.

The configuration of the bottom plate portion 31 (the plate portion 310, the ridge portion 311, the groove portion 312, and the connecting portion 313) is the same as the configuration of the top plate portion 11 (the plate portion 110, the ridge portion 111, the groove portion 112, and the connecting portion 113) of the upper case member 1 except that it is vertically symmetrical.

### 1-2-3-2. Third Wall Portion 23

Each of the pair of left and right third wall portions 23 extends upward from the end parts in the left-right direction of the bottom plate portion 31 and spreads in the front-rear direction. Note that, in this Embodiment, the configuration of each of the pair of left and right third wall portions 32 is the same except that they are bilaterally symmetrical. Therefore, in the following, the configuration of the third wall portion 32 on the right side will be described as a representative of both.

The third wall portion 32 includes a wall member 320. The wall member 320 is a plate-like member spreading in the front-rear direction and the up-down direction. The length of the wall member 320 in the front-rear direction is the same as the length of the bottom plate portion 31 in the front-rear direction in this Embodiment.

In addition, the third wall portion 32 further has a ridge portion 321, a groove portion 322, a second coupling portion 323, and a connecting portion 324. The ridge portion 321 is disposed on the right surface of the wall member 320. The groove portion 322, the second coupling portion 323, and the connecting portion 324 are disposed on the ridge portion 321. Note that the configurations of the ridge portion 321, the groove portion 322, the second coupling portion 323, and the connecting portion 324 are the same as those of the ridge portion 221, the groove portion 222, the second coupling portion 223, and the connecting portion 224 of the middle case member 2, respectively. Therefore, explanation thereof will be omitted.

In this Embodiment, the bottom case member 3 is an extrusion molded product extending in the front-rear direction. For example, a constituent element protruding from the surface of the bottom case member 3 as viewed from the front-rear direction extends from the front end part to the rear end part of the bottom case member 3. In addition, the cross-sectional shape of (a most part, excluding a female screw part 3232 of the rail portion 3231, the groove portion 312, and a female screw part of the groove portion 322 and the like, of) the bottom case member 3 viewed from the front-rear direction is the same over the front-rear direction. Therefore, (the most part of) the bottom case member 3 can be manufactured by extrusion molding using aluminum or an alloy thereof as a material. Furthermore, a width in the front-rear direction of the bottom case member 3 can be easily set by adjusting a cutting position of the extrusion molded body. Note that the female screw part 3232, the groove portion 312, and the female screw part of the groove portion 322, and the like can be formed by drilling, tapping, or the like on the cut extrusion molded body. Therefore, even if the bottom case member 3 has a complicated surface shape, it can be easily manufactured. Since the cost can be also reduced, productivity of the bottom case member 3 can be improved. However, this exemplification does not exclude such a configuration that the bottom case member 3 is not an extrusion molded product extending in the front-rear direction.

### 1-2-4. Front Plate 4

Subsequently, the front plate 4 is attached to the front end parts of the case members 10 stacked in the up-down direction by screwing or the like and covers the front end part of the accommodation space S formed inside the battery case 101.

The front plate 4 includes a lid plate 40, connection pieces 41, 42, 43, 44, and 45, female screw parts 46 and 48, and a connector portion opening 47.

The lid plate 40 is a plate-shaped member spreading in the left-right direction and the up-down direction and is disposed at front end parts of the case members 10 stacked in the up-down direction.

The connection pieces 41, 42, 43, 44, and 45 are plate pieces spreading outward from the outer edge of the lid plate 40 and constitute a single member together with the lid plate 40.

In this Embodiment, for example, three pieces of the connection pieces 41 extend upward from the upper end part of the lid plate 40 and are coupled to the front end part of the ridge portion 111 of the upper case member 1, respectively. In detail, the male screw N1 is inserted into the opening of the connection piece 41 and screwed into the female screw part (first fixing portion 1121) at the front end part of the groove portion 112.

In addition, a pair of the left and right connection pieces 42 extend outward in the left-right direction from end parts in the left-right direction of the lid plate 40 and are coupled to the front end part of the ridge portion 121 of the upper case member 1, respectively. In detail, the male screw N2 is inserted into the opening of the connection piece 42 and screwed into the female screw part (first fixing portion 1221) at the front end part of the groove portion 122.

In addition, a pair of the left and right connection pieces 43 extend outward in the left-right direction from the end parts in the left-right direction of the lid plate 40 and are coupled to the front end parts of the ridge portion 221 of the middle case member 2, respectively. In detail, the male screw N3 is inserted into the opening of the connection piece 43 and screwed into the female screw part (first fixing portion 2221) at the front end part of the groove portion 222.

In addition, a pair of the left and right connection pieces 44 extend outward in the left-right direction from end parts in the left-right direction of the lid plate 40 and are coupled to the front end part of the ridge portion 321 of the bottom case member 3, respectively. In detail, the male screw N4 is inserted into the opening of the connection piece 44 and screwed into the female screw part (first fixing portion 3221) at the front end part of the groove portion 322.

In addition, each of the three connection pieces 45 extends downward from the lower end part of the lid plate 40 and is coupled to a front end part of the ridge portion 311 of the bottom case member 3. In detail, the male screw N5 is inserted into the opening of the connection piece 45 and screwed into the female screw part (first fixing portion 3121) at the front end part of the groove portion 312.

The female screw parts 46 are disposed in plural on the front surface of the lid plate 40 and surround the connector portion opening 47. Each female screw part 46 extends rearward. A male screw N6 is inserted into an opening (reference numeral omitted) disposed in the sealing cover 1031 of the interface box 103 and is screwed into the female screw part 46. As a result, the interface box 103 is fixed to the front surface of the front plate 4.

The connector portion opening 47 is disposed in the lid plate 40 and opens in the front surface and the rear surface of the lid plate 40. A terminal portion 1041 protruding to the front of the connector portion 104 is inserted into the connector portion opening 47. The terminal portion 1041 is connected to a connection terminal for the battery module 102 accommodated in the interface box 103.

Female screw parts 48 are disposed in plural on the rear surface of the lid plate 40 and surround the connector portion opening 47. Each female screw part 48 extends forward. A male screw (not shown) is inserted into an opening (reference numeral omitted) disposed in the connector portion 104 and screwed into the female screw part 48. As a result, the connector portion 104 is fixed to the rear surface of the front plate 4.

Note that, in this Embodiment, the front plate 4 is a single plate and covers the front end parts of all the accommodation spaces S. However, this exemplification is not limiting, and the front plate 4 may be constituted by a plurality of front plate pieces aligned in the up-down direction. For example, each of the front plate pieces is a plate extending in the left-right direction and the up-down direction and covers one or more and less than X pieces of the accommodation spaces S. Note that X is the total number of accommodation spaces S provided in a single unit of the battery device 100, and in the case of FIGS. 1 to 3, it is X = 7. Preferably, a space between the front plate pieces adjacent to each other in the up-down direction is sealed. In this way, it is not necessary to prepare the front plates 4 with different up-down direction sizes in accordance with the number of stages of the case members 10 stacked in the up-down direction. Therefore, it is possible to easily configure the battery device 100 having a size corresponding to a required output.

### 1-2-5. Rear Plate 5

Subsequently, the rear plate 5 is attached to the rear end parts of the case members 10 stacked in the up-down direction by screwing or the like and covers the rear end parts of the accommodation spaces S formed inside the battery case 101.

The rear plate 5 includes a lid plate 50 and connection pieces 51, 52, 53, 54, and 55.

The lid plate 50 is a plate-shaped member spreading in the left-right direction and the up-down direction and is disposed at rear end parts of the case members 10 stacked in the up-down direction.

The connection pieces 51, 52, 53, 54, and 55 are plate pieces extending outward from the outer edge of the lid plate 50 and constitute a single member together with the lid plate 50.

In this Embodiment, for example, three pieces of the connection pieces 51 extend upward from the upper end part of the lid plate 50 and are coupled to a rear end part of the ridge portion 111 of the upper case member 1, respectively. In detail, the male screw M1 is inserted into the opening of the connection piece 51 and screwed into the female screw part (second fixing portion 1122) at a rear end part of the groove portion 112.

In addition, a pair of left and right connection pieces 52 extend outward in the left-right direction from end parts in the left-right direction of the lid plate 50 and are coupled to the rear end part of the ridge portion 121 of the upper case member 1, respectively. In detail, the male screw M2 is inserted into the opening of the connection piece 52 and screwed into the female screw part (second fixing portion 1222) at a rear end part of the groove portion 122.

In addition, a pair of left and right connection pieces 53 extend outward in the left-right direction from the end parts in the left-right direction of the lid plate 50 and are coupled to a rear end part of the ridge portion 221 of the middle case member 2, respectively. In detail, the male screw M3 is inserted into the opening of the connection piece 53 and is screwed into the female screw part (second fixing portion 2222) at a rear end part of the groove portion 222.

In addition, a pair of left and right connection pieces 54 extend outward in the left-right direction from the end parts in the left-right direction of the lid plate 50 and are coupled to a rear end part of the ridge portion 321 of the bottom case member 3, respectively. In detail, the male screw M4 is inserted into the opening of the connection piece 54 and screwed into the female screw part (second fixing portion 3222) at a rear end part of the groove portion 322.

In addition, each of the three pieces of the connection pieces 55 extends downward from the lower end part of the lid plate 50 and is coupled to a rear end part of the ridge portion 311 of the bottom case member 3. In detail, the male screw M5 is inserted into the opening of the connection piece 55 and screwed into the female screw part (second fixing portion 3122) at a rear end part of the groove portion 312.

In addition, in this Embodiment, the rear plate 5 is a single plate and covers the rear end parts of all the accommodation spaces S. However, this exemplification is not limiting, and the rear plate 5 may be constituted by a plurality of rear plate pieces aligned in the up-down direction. For example, each of the rear plate pieces is a plate extending in the left-right direction and the up-down direction and covers one or more and less than X pieces of the accommodation spaces S. Note that X is, as described above, the total number of the accommodation spaces S provided in one battery device 100, and it is X = 7 in FIGS. 1 to 3. Preferably, a space between the front plate pieces adjacent to each other in the up-down direction is sealed. In this way, it is not necessary to prepare the rear plates 5 with different up-down direction sizes in accordance with the number of stages of the case members 10 stacked in the up-down direction. Therefore, it is possible to easily configure the battery device 100 having a size corresponding to a required output.

### 1-3. Variations of Embodiment

In this Embodiment, the first coupling portions 123, 225 have the flange portions 1231, 2251, the recessed portions 1232, 2252, and the plurality of openings 1233, 2253. On the other hand, the second coupling portions 223, 323 coupled to the first coupling portions 123, 225 have the rail portions 2231, 3231 and the female screw parts 2232, 3232. However, this exemplification is not limiting, and in the wall portions 12, 22, 32 of at least either one of the wall portions 12, 22, 32 on the left side and the wall portions 12, 22, 32 on the right side of the case member 10, the configuration of the first coupling portions 123, 225 and the configuration of the second coupling portions 223, 323 may be switched. For example, in at least one of the wall portions 12, 22, 32 described above, the first coupling portions 123, 225 may have the rail portions 2231, 3231 and the female screw parts 2232, 3232. In addition, the second coupling portions 223, 323 may have the flange portions 1231, 2251, the recessed portions 1232, 2252, and the plurality of openings 1233, 2253.

In addition, in this Embodiment, the rail portions 2231, 3231 are fitted into the recessed portions 1232, 2252 and screwed so that the second coupling portions 223, 323 are coupled to the first coupling portions 123, 225. However, this exemplification is not limiting, and the both may be coupled by a fitting structure of a T-shaped portion with respect to a T-shaped groove similarly to the connecting portions 113, 224, 313, 324. For example, similarly to the T-shaped grooves 1132, 2241, 3132, 3241, the T-shaped groove has a T-shaped inner shape, when viewed from the front-rear direction, and extends in the front-rear direction from the front end part to the rear end part of the case member 10. In addition, the above-described T-shaped portion has a T-shaped outer shape when viewed from the front-rear direction, similarly to the T-shaped portion on one side of the H-shaped member 105, for example, and extends in the front-rear direction from the front end part to the rear end part of the case member 10. The above-described T-shaped portion can be fitted into the T-shaped groove by inserting from the front end part or the rear end part of the above-described T-shaped groove and sliding it. For example, in at least either one of the wall portions 12, 22, 32 of the left-side wall portions 12, 22, 32 and the right-side wall portions 12, 22, 32 of the case member 10, one of the coupling portions in the second coupling portions 223, 323 and the first coupling portions 123, 225 may have the above-described T-shaped groove, and the other coupling portion may have the above-described T-shaped portion.

### 2. Remarks

The Embodiments of the present invention have been explained. Note that it should be understood by those skilled in the art that the above-described Embodiments are merely exemplifications, and various variations can be made to a combination of constituent elements and processing thereof and are within the scope of the present invention.

### 3. Overview

Hereinafter, the Embodiments described above will be collectively described.

For example, the battery case 101 disclosed in this Specification has a configuration (first configuration) including:
a plurality of case members 10 stacked in the first direction (up-down direction); and
an accommodation space S capable of accommodating a battery module 102 between the case members 10 adjacent to each other in the first direction (up-down direction), in which
the case members 10 adjacent to each other in the first direction (up-down direction) respectively include a plate portion 20 spreading in a direction intersecting the first direction (up-down direction);
the case member 10 on one (upper) side in the first direction of the case members 10 adjacent to each other in the first direction (up-down direction) further includes first coupling portions 123, 225 disposed on both end sides in a second direction (left-right direction) intersecting the first direction (up-down direction) of the plate portion 20 of the case member 10 on the one (upper) side in the first direction; and
the case members 10 on the other (lower) side in the first direction of the case members 10 adjacent to each other in the first direction (up-down direction) are disposed on the both end sides in the second direction (left-right direction) of the case member 10 on the other (lower) side in the first direction and further has second coupling portions 223, 323 coupled to the first coupling portions 123, 225.

The battery case 101 having the above-described first configuration may have a configuration (second configuration), in which
the plurality of case members 10 include:
a first case member 1 disposed on the farthest one side (the uppermost side) in the first direction;
a second case member 3 disposed on the farthest other side (the lowermost side) in the first direction; and
a third case member 2 disposed between the first case member 1 and the second case member 3, in which
the first case member 1, the second case member 3, and the third case member 2 respectively have a plate portion 20 spreading in a direction intersecting the first direction (up-down direction);
the first coupling portion 123 of the first case member 1 is coupled to the second coupling portion 223 of the third case member 2 adjacent to the first case member 1 in the first direction (up-down direction); and
the second coupling portion 323 of the second case member 3 is coupled to the first coupling portion 225 of the third case member 2 adjacent to the second case member 3 in the first direction (up-down direction).

In addition, the battery case 101 of the above-described second configuration may have a configuration (third configuration) having:
a plurality of the third case members 2, in which
in the third case members 2 adjacent to each other in the first direction (up-down direction), the first coupling portion 225 of the third case member 2 on one (upper) side in the first direction is coupled to the second coupling portion 223 of the third case member 2 on the other (lower) side in the first direction.

In addition, the battery case 101 having the second or third configuration may have a configuration (fourth configuration), in which
the plate portion 20 (21) of the third case member 2 has at least either one of:
a first recessed portion 211 that is recessed toward the other (rear) side in the third direction at an end part on one (front) side in the third direction intersecting the first direction (up-down direction) and the second direction (left-right direction) of the plate portion 20 (21) of the third case member; and
a second recessed portion 212 that is recessed toward one (front) side in the third direction at an end part on the other (rear) side in the third direction of the plate portion 20 (21) of the third case member 2.

In addition, the battery case 101 having any one of the above-described second to fourth configurations may have a configuration (fifth configuration), in which
the third case member 2 further has a pair of wall portions 22 disposed at one (left) side end part and the other (right) side end part in the second direction of the plate portion 20 (21) of the third case member 2; and
the wall portion 22 extends from the end part in the second direction (left-right direction) of the plate portion 20 (21) of the third case member 2 toward one (upper) side and the other (lower) side in the first direction.

In addition, the battery case 101 having any one of the above-described first to fifth configurations may have a configuration (sixth configuration), in which
the third case member 2 further has a pair of wall portions 22 disposed at one (left) side end part and the other (right) side end part in the second direction of the plate portion 20 (21) of the third case member 2;
the wall portions 22 extend from the end part in the second direction (left-right direction) of the plate portion 20 (21) of the third case member 2 toward one (upper) side and the other (lower) side in the first direction;
at least any one of the case members 10 has connecting portions 113, 224, 313, and 324;
the connecting portions 113, 224, 313, and 324 are:
   connectable with an other battery case 101; and
   disposed on at least one of one (upper) side end surface in the first direction of the plate portion 110 of the first case member 1, the other (lower) side end surface in the first direction of the plate portion 310 of the second case member 3, an outer side end surface in the second direction (left-right direction) of the wall portion 32 of the second case member 3, and an outer side end surface in the second direction (left-right direction) of the wall portion 22 of the third case member 2.

In addition, the battery case 101 having the sixth configuration may have a configuration (seventh configuration), further having:
a first plate 4 that covers one (front) side end parts in a third direction (front-rear direction) intersecting the first direction (up-down direction) and the second direction (left-right direction) of a plurality of the case members 10; and
a second plate 5 that covers the other (rear) side end parts in the third direction of the plurality of case members 10, in which
the wall portion 22 further has:
   a ridge portion 221 protruding outward in the second direction (left-right direction) at an end part in the first direction (up-down direction) of the wall portion 22 and extending from one (front) side end part to the other (rear) side end part in the third direction of the wall portion 22;
   a first fixing portion 1221 disposed at the one (front) side end part in the third direction of the ridge portion 221 and configured to attach the first plate 4 to the wall portion 22; and
   a second fixing portion 1222 disposed at the other (rear) side end part in the third direction of the ridge portion 221 and configured to attach the second plate 5 to the wall portion 22, and
   in the ridge portion 221, either one of the first coupling portion 225 and the second coupling portion 223 and the connecting portion 224 are further disposed.

In addition, the battery case 101 having any one of the above-described first to seventh configurations may have a configuration (eighth configuration) that:
the case member 10 is an extrusion molded product extending in the third direction (front-rear direction) intersecting the first direction (up-down direction) and the second direction (left-right direction).

In addition, the battery device 100 disclosed in this specification has a configuration (ninth configuration), including:
the battery case 101 having any one of the above-described first to eighth configurations; and
a battery module 102 accommodated in the battery case 101.

In addition, the battery device 100 having the above-described ninth configuration may have a configuration (tenth configuration), further including:
an interface box 103 accommodating the electric component 1032; and
a connector portion 104 electrically connecting the battery module 102 and the electric component 1032, in which
the interface box 103 is disposed outside the battery case 101.

Also, the vehicle 500 disclosed in this Specification is configured to include
the battery device 100 of the above-described ninth or tenth configuration (eleventh configuration).

### REFERENCE SIGNS LIST

100 Battery device
101 Battery case
102 Battery module
103 Interface box
1031 Sealing cover
1032 Electric component
104 Connector
1041 Terminal part
105 H-shaped member
500 Vehicle
10 Case member
20 Plate portion
1 First case member
11 Top plate portion
110 Plate portion
111 Ridge portion
112 Groove portion
1121 First fixing portion
1122 Second fixing portion
113 Connecting portion
1131 Protruding portion
1132 T-shaped groove
12 First wall portion
120 Wall member
121 Ridge portion
122 Groove portion
1221 First fixing portion
1222 Second fixing portion
123 First coupling portion
1231 Flange portion
1232 Recessed portion
1233 Opening
2 Second case member
21 Plate portion
211 First recessed portion
212 Second recessed portion
22 Second wall portion
220 Wall member
221 Ridge portion
222 Groove portion
2221 First fixing portion
2222 Second fixing portion
223 Second coupling portion
2231 Rail portion
2232 Female screw part
224 Connecting portion
2241 T-shaped groove
225 First coupling portion
2251 Flange portion
2252 Recessed portion
2253 Opening
3 Third case member
31 Bottom plate portion
310 Plate portion
311 Ridge portion
312 Groove portion
3121 First fixing portion
3122 Second fixing portion
313 Connecting portion
3131 Protruding portion
3132 T-shaped groove
32 Third wall portion
320 Wall member
321 Ridge portion
322 Groove portion
3221 First fixing portion
3222 Second fixing portion
323 Second coupling portion
3231 Rail portion
3232 Female screw part
324 Connecting portion
3241 T-shaped groove
4 Front Plate
40 Lid plate
41, 42, 43, 44, 45 Connection piece
46, 48 Female screw part
47 Connector opening
5 Rear plate
50 Lid plate
51, 52, 53, 54, 55 Connection piece
S Accommodation space
H Heater
B Bolt
N1, N2, N3, N4, N5, N6, M1, M2, M3, M4, M5 Male screw

## Claims

1. A battery case, comprising: a plurality of case members stacked in a first direction; and
an accommodation space capable of accommodating a battery module between the case members adjacent to each other in the first direction, wherein
each of the case members adjacent to each other in the first direction has a plate portion spreading in a direction intersecting the first direction;
the case member on one side in the first direction of the case members adjacent to each other in the first direction further has first coupling portions disposed on both end sides in a second direction intersecting the first direction of the plate portion of the case member on the one side in the first direction; and
the case member on the other side in the first direction of the case members adjacent to each other in the first direction further has second coupling portions disposed on the both end sides in the second direction of the case member on the other side in the first direction and coupled to the first coupling portions.

2. The battery case according to claim 1, wherein the plurality of case members include:
a first case member disposed on the farthest one side in the first direction;
a second case member disposed on the farthest other side in the first direction; and
a third case member disposed between the first case member and the second case member, wherein
the first case member, the second case member, and the third case member respectively have a plate portion spreading in a direction intersecting the first direction;
the first coupling portion of the first case member is coupled to the second coupling portion of the third case member adjacent to the first case member in the first direction; and
the second coupling portion of the second case member is coupled to the first coupling portion of the third case member adjacent to the second case member in the first direction.

3. The battery case according to claim 2, comprising: a plurality of third case members, including the third case member, wherein
in the third case members adjacent to each other in the first direction, the first coupling portion of the third case member on one side in the first direction is coupled to the second coupling portion of the third case member on the other side in the first direction.

4. The battery case according to claim 2, wherein the plate portion of the third case member has at least either one of:
a first recessed portion that is recessed, at an end part on one side in a third direction intersecting the first direction and the second direction of the plate portion of the third case member, toward the other side in the third direction; and
a second recessed portion that is recessed toward one side in the third direction at an end part on the other side in the third direction of the plate portion of the third case member.

5. The battery case according to claim 2, wherein the third case member further has a pair of wall portions disposed at one-side end part and the other-side end part in the second direction of the plate portion of the third case member; and
the wall portion extends from an end part in the second direction of the plate portion of the third case member toward one side and the other side in the first direction.

6. The battery case according to claim 2, wherein the third case member further has a pair of wall portions disposed at one-side end part and the other-side end part in the second direction of the plate portion of the third case member;
the wall portions extend from the end part in the second direction of the plate portion of the third case member toward one side and the other side in the first direction;
at least any one of the case members has a connecting portion;
the connecting portion is:
connectable with an other battery case; and
disposed on at least one of one side end surface in the first direction of the plate portion of the first case member, the other side end surface in the first direction of the plate portion of the second case member, an outer side end surface in the second direction of the wall portion of the second case member, and an outer side end surface in the second direction of the wall portion of the third case member.

7. The battery case according to claim 6, further comprising: a first plate that covers one-side end part in a third direction intersecting the first direction and the second direction of the plurality of case members; and
a second plate that covers the other-side end part in the third direction of the plurality of case members, wherein
the wall portion further has:
a ridge portion protruding outward in the second direction at an end part in the first direction of the wall portion and extending from the one-side end part to the other-side end part in the third direction of the wall portion;
a first fixing portion disposed at the one-side end part in the third direction of the ridge portion and attaching the first plate to the wall portion; and
a second fixing portion disposed at the other-side end part in the third direction of the ridge portion and attaching the second plate to the wall portion, and
in the ridge portion, either one of the first coupling portion and the second coupling portion and the connecting portion are further disposed.

8. The battery case according to claim 1, wherein the case member is an extrusion molded product extending in a third direction intersecting the first direction and the second direction.

9. A battery device, comprising: the battery case according to any one of claims 1 to 8; and
a battery module accommodated in the battery case.

10. The battery device according to claim 9, further comprising: an interface box accommodating the electric component; and
a connector portion electrically connecting the battery module and the electric component, wherein
the interface box is disposed outside the battery case.

11. A vehicle comprising the battery device according to claim 9.
